# EUROPEAN PATENT APPLICATION

(11) **EP 4 468 566 A1**
(43) Date of publication of application: **27.11.2024**
(21) Application number: 23175660.2
(22) Date of filing: 26.05.2023
(51) Int. Cl.: H02K 1/276, H02K 21/16

(54) **ROTOR ASSEMBLY**

(71) Applicant: Mainpack Industrial Co., Ltd., Dadu Dist. Taichung City (TW)
(72) Inventor: HUANG, Chun-Neng, Taichung City (TW)
(74) Representative: Casalonga

(57) **Abstract**

A rotor assembly has a shaft (10), a core (20) having multiple core sheets (20A/20B), and multiple permanent magnets (30) arranged around the shaft (10). An angle (θ) formed between each adjacent two of the multiple permanent magnets (30) is larger than 0 degree and smaller than or equal to 90 degrees. The multiple core sheets (20A/20B) include multiple stacked major core sheets (20B). Each major core sheet (20B) has multiple tooth portions (23) respectively having a projection (232) and a joining hole (231). The projections (232) of the tooth portions (23) of one of adjacent two of the major core sheets (20B) are respectively inserted into the joining holes (231) and stacked with the projections (232) of the other one of the two adjacent two major core sheets (20B). The rotor assembly has a rigid structure and high magnetic flux density.

## Description

### 1. Field of the Invention

The present invention relates to a component of a permanent magnet motor, and more particularly to a rotor assembly with high magnetic flux density and a rigid structure.

### 2. Description of Related Art

Compared with a conventional brushed DC electric motor, a permanent magnet motor has advantages of simple structure, small size, and low failure rate.

A rotor assembly is one of major components of the permanent magnet motor. In order to reduce energy loss, e.g. iron loss, in the rotor assembly, the rotor assembly of the permanent magnet motor usually comprises multiple stacked silicon steel sheets.

The multiple stacked silicon steel sheets of the rotor assembly of a conventional permanent magnet motor are combined with one another via soldering or riveting. Recently, the multiple stacked silicon steel sheets may be combined with one another via adhesive bonding.

However, the multiple silicon steel sheets are combined with one another via soldering may lead to low magnetic flux density. During the rotor assembly rapidly spinning, the multiple silicon steel sheets combined with one another via adhesive bonding may not have enough combining strength. Therefore, the rotor assembly of the conventional permanent magnet motor needs to be improved.

To overcome the shortcomings, the present invention tends to provide a rotor assembly to mitigate the aforementioned problems.

The main objective of the invention is to provide a rotor assembly with a rigid structure and a high magnetic flux density.

A rotor assembly comprises a shaft, a core, and multiple permanent magnets. The core surrounds the shaft and includes multiple core sheets stacked with one another and mounted to the shaft and multiple magnet channels arranged around the core at angular intervals and extending along the shaft. Each of the multiple core sheets has a first surface and a second surface facing opposite, a shaft hole formed through a middle of the core sheet and mounted around the shaft, multiple tooth portions arranged around the shaft hole at angular intervals, and multiple slots formed between the multiple tooth portions. Each slot is disposed between adjacent two of the multiple tooth portions. Each of the magnet channels is formed by the slots, of the multiple core sheets, aligning and communicating with one another. The shaft extends through the shaft holes of the multiple core sheets of the core. The multiple permanent magnets are respectively disposed in the multiple magnet channels of the core and are arranged around the shaft at angular intervals. An angle formed between each adjacent two of the multiple permanent magnets is larger than 0 degree and smaller than or equal to 90 degrees. The multiple core sheets includes multiple major core sheets stacked with one another. Each of the tooth portions of each of the multiple major core sheets has a projection protruding from the first surface of the major core sheet to form a joining hole defined in a second surface of the major core sheet. The projection of each of the tooth portions of each of the multiple major core sheets has two disconnecting edges extending toward the shaft hole of the major core sheet and two connecting edges connecting to the tooth portion. The joining hole of each of the tooth portions of each of the multiple major core sheets is rectangular and extends toward the shaft hole of the major core sheet. The projections of the multiple tooth portions of one of adjacent two of the multiple major core sheets are respectively inserted into the joining holes of the multiple tooth portions of the other one of the adjacent two of the major core sheets to stack with the projections of the multiple tooth portions of said the other one of the adjacent two of the multiple major core sheets.

Other objects, advantages and novel features of the invention will become more apparent from the following detailed description when taken in conjunction with the accompanying drawings.

### IN THE DRAWINGS

Fig. 1 is a perspective view of a rotor assembly in accordance with the present invention;
Fig. 2 is an end view of the rotor assembly in Fig. 1;
Fig. 3 is a partially exploded perspective view of the rotor assembly in Fig. 1;
Fig. 4 is a cross sectional side view of an end core sheet of the rotor assembly in Fig. 3;
Fig. 5 is a partially enlarged view of the end core sheet in Fig. 4;
Fig. 6 is a cross sectional side view of a major core sheet of the rotor assembly in Fig. 3;
Fig. 7 is a partially enlarged view of the major core sheet in Fig. 6;
Fig. 8 is a partially enlarged cross sectional side view of the major core sheet of the rotor assembly in Fig. 6;
Fig. 9 is a cross sectional side view of two stacked major magnetic sheets of the rotor assembly in Fig. 3;
Fig. 10 is a cross sectional side view of multiple stacked core sheets of the rotor assembly in Fig. 3; and
Fig. 11 is an operational end view showing the rotor assembly in Fig. 1 assembled with a stator assembly.

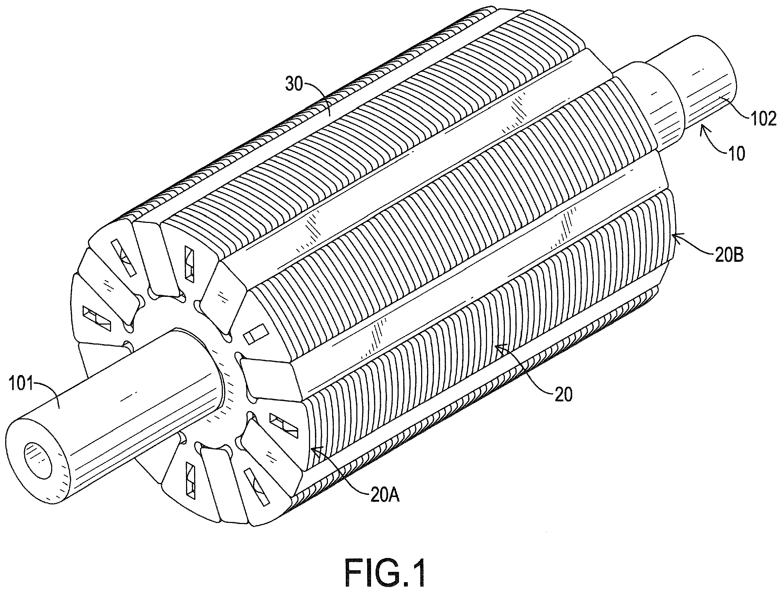

With reference to Fig. 1, a rotor assembly in accordance with the present invention comprises a shaft 10, a core 20 including multiple core sheets (end core sheets 20A/ major core sheets 20B) stacked with one another, and multiple permanent magnets 30.

With reference to Fig. 1, the shaft 10 is elongated and has a first end 101 and a second end 102 opposite to each other.

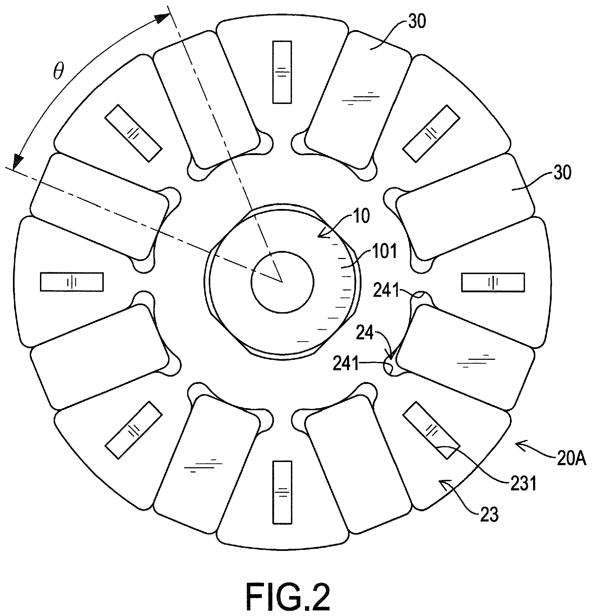

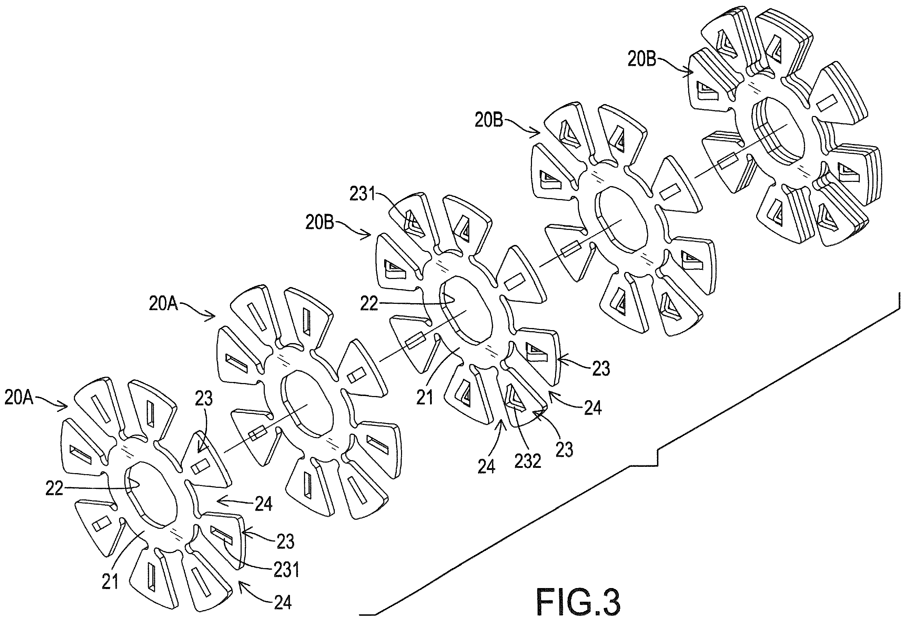

With reference to Figs. 1 to 3, each core sheet 20A/20B is a thin piece and includes a sheet body 21, a shaft hole 22, multiple tooth portions 23, and multiple slots 24. Each core sheet 20A/20B has a first surface and a second surface facing opposite. The sheet body 21 of each core sheet 20A/20B has a thickness T1. The shaft hole 22 is formed through the sheet body 21 at a middle thereof. The multiple tooth portions 23 are radially arranged around the shaft hole 22 at angular intervals to form the multiple slots 24 therebetween. Each of the multiple slots 24 is formed between adjacent two of the tooth portions 23. Each slot 24 has two lateral gaps 241 being adjacent to the shaft hole 22 and extending toward opposite directions. The shaft 10 extends through the shaft holes 22 of the core sheets 20A/20B stacked with one another. The core 20 includes multiple magnet channels arranged around the core 20 at angular intervals and extending along the shaft 10. Each of the magnet channels is formed by the slots 24, of the multiple core sheets 20A/20B stacked with one another, aligning and communicating with one another.

With reference to Figs. 1 to 3, the multiple core sheets 20A/20B include multiple major core sheets 20B stacked with one another and at least one end core sheet 20A disposed at an end of the core 20 and stacked with the multiple major core sheets 20B.

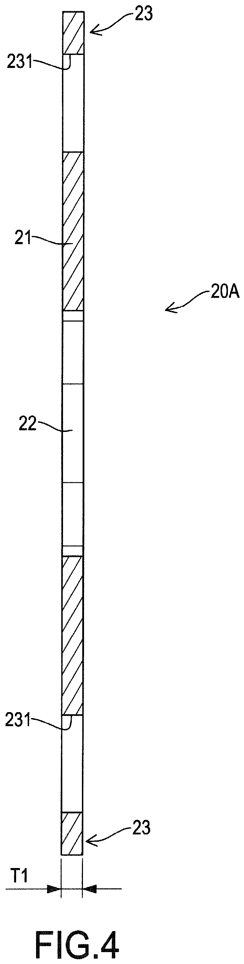

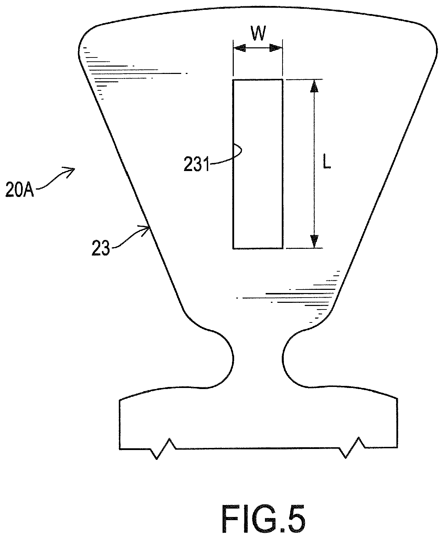

With reference to Figs. 1 to 5, each tooth portion 23 of each of the end core sheets 20A has a joining hole 231 formed through the sheet body 21 of the end core sheet 20A via punching. The joining hole 231 is a rectangular opening, radially extends toward the shaft hole 22, and has a length L extending toward the shaft hole 22 along a radial direction of the end core sheet 20A and a width W. The length L of the joining hole 231 of each tooth portion 23 is three times of the width W of the joining hole 231. The at least one end core sheet 20A may include multiple end core sheets 20A stacked with one another.

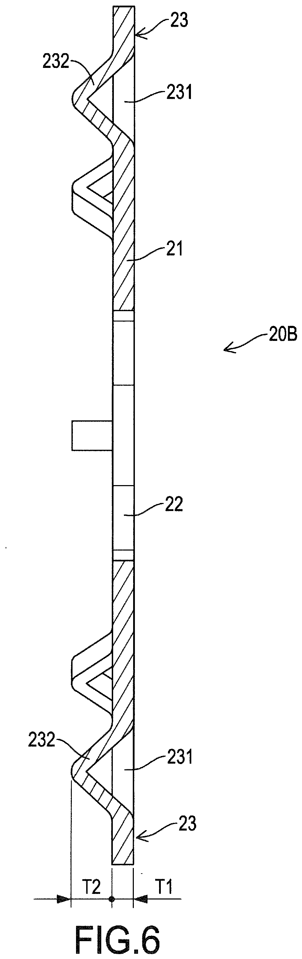

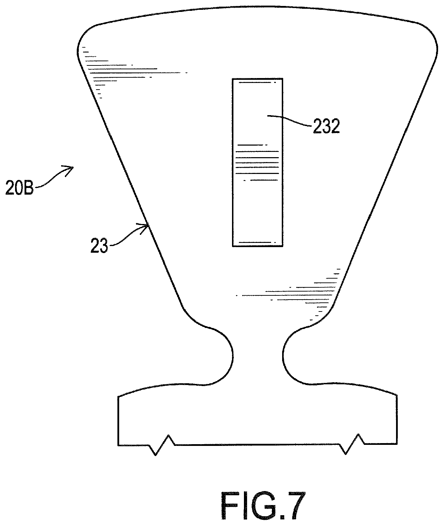

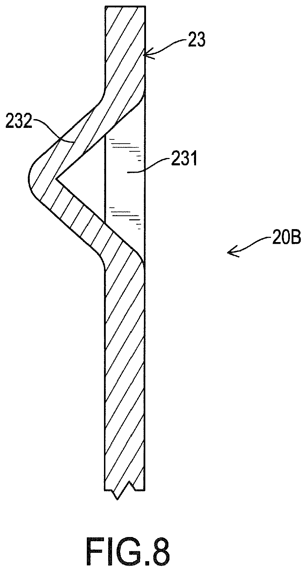

With reference to Figs. 1 to 3 and 6 to 8, each tooth portion 23 of each major core sheet 20B has a projection 232 protruding from the first surface of the major core sheet 20B and a joining hole 231 defined in the second surface of the major core sheet 20B via punching. The projection 232 has a projection height T2, two disconnecting edges separating from the sheet body 21, and two connecting edges connecting to the tooth portion 23. The two disconnecting edges are parallel to each other and extend toward the shaft hole 22. The joining hole 231 is a rectangular opening and radially extends toward the shaft hole 22. A length of the joining hole 231 is three times of a width thereof. The projection height T2 of the projection 232 of each tooth portion 23 of each major core sheet 20B is defined as a distance from a top of the projection 232 to the first surface of the major core sheet 20B. The projection height T2 of the projection 232 of each tooth portion 23 of each major core sheet 20B ranges from two to three times of the thickness T1 of the sheet body 21.

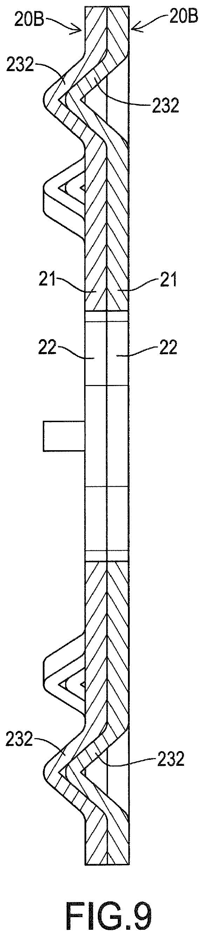

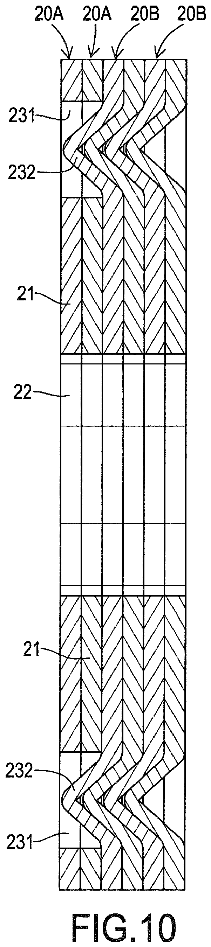

With reference to Figs. 9 and 10, when two adjacent major core sheets 20B are stacked with each other, the projections 232 of the tooth portions 23 of one of the two adjacent major core sheets 20B are respectively inserted into the joining holes 231 of the tooth portions 23 of the other one of the two adjacent major core sheets 20B to stack with the projections 232 of the tooth portions 23 of the other one of the two adjacent major core sheets 20B. Wherein, one of the at least one end core sheet 20A is adjacent to the first surface of one of the two adjacent major core sheets 20B. The projections 232 of the tooth portions 23 of said one major core sheet 20B are respectively inserted into the joining holes 231 of the tooth portions 23 of said end core sheet 20A. Preferably, the projections 232 of the major core sheets 20B are kept from extending out of the first surface of the said end core sheet 20A facing away from the said major core sheets 20B. The at least one end core sheet 20A may include multiple end core sheets 20A stacked with each other.

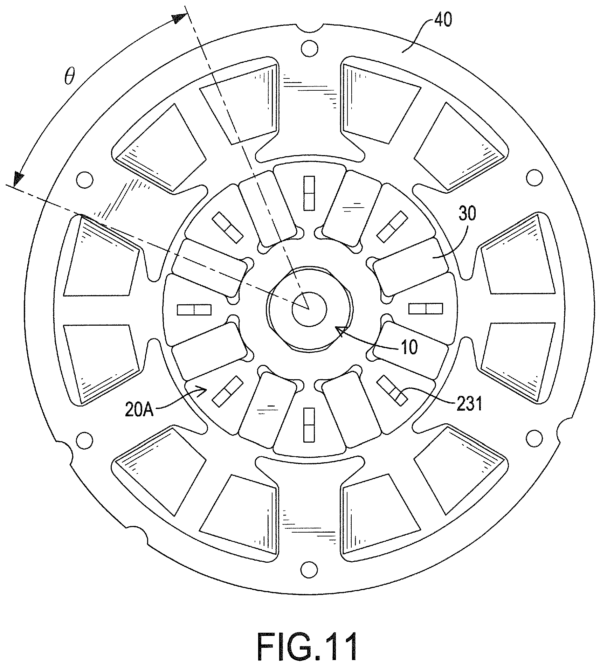

With reference to Figs. 1 and 11, the multiple permanent magnets 30 are respectively disposed in the magnet channels of the core 20 and are radially arranged around the shaft 10 at angular intervals. Each of the permanent magnets 30 is disposed between adjacent two tooth portions 23 of each core sheet 20A/20B. An angle 0 formed between each adjacent two of the multiple permanent magnets 30 is larger than 0 degree and less than or equal to 90 degrees.

With reference to Fig. 11, the rotor assembly in accordance with the present invention may be included by a high torque motor, disposed in a stator assembly 40 of the high torque motor, and configured to rotate relative to the stator assembly 40.

Each major core sheet 20B is punched to form the projection 232 and the joining hole 231 at each tooth portion 23. With the structures of the projections 232 and the joining holes 231 of the tooth portions 23, the core sheets 20A/20B of the core 20 are easily combined with one another along the shaft 10, hereby increasing manufacturing yield rate. Each projection 232 has the two disconnecting edges separating from the sheet body 21 and extending toward the shaft hole 22 and two connecting edges connecting to the sheet body 21 to form flux barriers. Compared with conventional rotor assembly with non-punching flat silicon steel sheets, a magnetic flux density of the rotor assembly in accordance with the present invention is increased by 10% to 25%. A torque of an electric motor including the rotor assembly can be increased by 5% to 15%. A size of the rotor assembly in accordance with the present invention may be adjusted according to an amount of the core sheets 20A/20B stacked along the shaft 10, an amount of the permanent magnets 30, or a size of each permanent magnet 30.

Each core sheet 20A/20B may be made of a silicon steel sheet or cobalt-vanadium alloy. Each permanent magnet 30 may be made of ferrite or samarium cobalt alloy. Each permanent magnet 30 may be a NdFeB magnet.

## Claims

1. A rotor assembly, **characterized in that** the rotor assembly comprises:
a shaft (10) being elongated and having two opposite ends;
a core (20) surrounding the shaft (10) and including
multiple core sheets (20A/20B) stacked with one another and mounted to the shaft (20), each of the multiple core sheets (20A/20B) having
a first surface and a second surface facing opposite;
a shaft hole (22) formed through a middle of the core sheet (20A/20B) and mounted around the shaft (10);
multiple tooth portions (23) arranged around the shaft hole (22) at angular intervals; and
multiple slots (24) formed between the multiple tooth portions (23), each slot (24) disposed between adjacent two of the multiple tooth portions (23); and
multiple magnet channels arranged around the core (20) at angular intervals and extending along the shaft (10), each of the magnet channels formed by the slots (24), of the multiple core sheets (20A/20B), aligning and communicating with one another;
the shaft (10) extending through the shaft holes (22) of the multiple core sheets (20A/20B) of the core (20);
multiple permanent magnets (30) respectively disposed in the multiple magnet channels of the core (20) and arranged around the shaft (10) at angular intervals, wherein
an angle formed between each adjacent two of the multiple permanent magnets (30) is larger than 0 degree and smaller than or equal to 90 degrees;
the multiple core sheets (20A/20B) include multiple major core sheets (20B) stacked with one another;
each of the tooth portions (23) of each of the multiple major core sheets (20B) has
a projection (232) protruding from the first surface of the major core sheet (20B) to form a joining hole (231) recessed in the second surface of the major core sheet (20B);
the projection (232) of each of the tooth portions (23) of each of the multiple major core sheets (20B) has two disconnecting edges extending toward the shaft hole (22) of the major core sheet (20B) and two connecting edges connecting to the tooth portion (23);
the joining hole (231) of each of the tooth portions (23) of each of the multiple major core sheets (20B) is rectangular and extends toward the shaft hole (22) of the major core sheet (20B);
the projections (232) of the multiple tooth portions (23) of one of adjacent two of the multiple major core sheets (20B) are respectively inserted into the joining holes (231) of the multiple tooth portions (23) of the other one of the adjacent two of the multiple major core sheets (20B) to stack with the projections (232) of the multiple tooth portions (23) of said the other one of the adjacent two of the multiple major core sheets (20B).

2. The rotor assembly as claimed in claim 1, wherein
the multiple core sheets (20A/20B) include at least one end core sheet (20A) disposed at an end of the core (20) and stacked with the multiple major core sheets (20B);
each of the multiple tooth portions (23) of each one of the at least one end core sheet (20A) has a joining hole (231) formed through the tooth portion (23), being rectangular, and extending toward the shaft hole (22) of the end core sheet (20A);
the projections (232) of the multiple tooth portions (23) of one of the multiple major core sheets (20B) being adjacent to one of the at least one end core sheet (20A) are respectively inserted into the joining holes (231) of the multiple tooth portions (23) of the end core sheet (20A).

3. The rotor assembly as claimed in claim 2, wherein
each of the multiple major core sheets (20B) has a sheet body (21) having a thickness (T1);
the projection (232) of each of the multiple tooth portions (23) of each of the major core sheets (23B) has a projection height (T2) ranging from two to three times of the thickness (T1) of the sheet body (21) of the major core sheet (20B).

4. The rotor assembly as claimed in claim 2 or 3, wherein
the joining hole (231) of each of the multiple tooth portions (23) of each of the at least one end core sheet (20A) has a length (L) extending toward the shaft hole (22) of the end core sheet (20A) being three times of a width (W) of said joining hole (231).

5. The rotor assembly as claimed in any one of claims 1 to 4, wherein
each of the slots (24) of each of the multiple core sheets (20A/20B) has two lateral gaps (241) being adjacent to the shaft hole (22) of the core sheet (20A/20B) and extending toward opposite directions.

6. The rotor assembly as claimed in any one of claims 1 to 5, wherein each of the multiple core sheets (20A/20B) is made of a silicon steel sheet.

7. The rotor assembly as claimed in any one of claims 1 to 5, wherein each of the multiple core sheets (20A/20B) is made of a cobalt-vanadium alloy.

8. The rotor assembly as claimed in any one of claims 1 to 5, wherein each permanent magnet (30) is made of ferrite.

9. The rotor assembly as claimed in any one of claims 1 to 5, wherein each permanent magnet (30) is a NdFeB magnet.

10. The rotor assembly as claimed in any one of claims 1 to 5, wherein each permanent magnet (30) is made of a samarium cobalt alloy.
